Europäisches Patentamt

European Patent Office

Office européen des brevets

(19)

(11) **EP 0 396 517 B1**

(12) **EUROPEAN PATENT SPECIFICATION**

(45) Date of publication and mention
of the grant of the patent:
**17.01.1996 Bulletin 1996/03**

(51) Int Cl.[6]: **G06T 5/20**

(21) Application number: **90850123.2**

(22) Date of filing: **02.04.1990**

(54) **Method of convoluting digital images**

Verfahren zur Faltung von numerischen Bildern

Méthode pour faire la convolution des images numériques

(84) Designated Contracting States:
**DE FR GB IT**

(30) Priority: **28.04.1989 US 344721**

(43) Date of publication of application:
**07.11.1990 Bulletin 1990/45**

(73) Proprietor: **International Business Machines
Corporation
Armonk, N.Y. 10504 (US)**

(72) Inventors:
• **Gonzalez-Lopez, Jorge
Red Hook, New York 12571 (US)**
• **Liang, Bob Chao-Chu
West Hurley, New York 12401 (US)**
• **Tannenbaum, David Conrad
Kingston, New York 12401 (US)**

(74) Representative: **Burt, Roger James, Dr. et al
Winchester, Hampshire SO21 2JN (GB)**

(56) References cited:
**EP-A- 0 269 993**

• **ELEVENTH COLLOQUIUM GRETSI, Nice, 1st -
5th June 1987, pages 649-652; P. DUCLOS et al.:
"Mise en oeuvre d'algorithmes de
transformations geometriques sur une
architecture parallele de type SIMD/SPMD"**
• **PATENT ABSTRACTS OF JAPAN, vol. 6, no. 34
(P-104)[912], 2nd March 1982;**
• **COMPUTER TECHNOLOGY REVIEW, vol. 4, no.
4, 1984, pages 153,156,158-159, Los Angeles,
California, US; A. BRIDGES: "Multiple
processors, optical disk recorders boost
graphics systems"**

**Description**

Field of the Invention

The present invention relates to a method for performing a convolution operation on a digital image and more particularly to a method which avoids the need for additional logic to process boundary conditions.

Background

Graphics processing is divided into two major fields: the synthesis of pictures or objects based on graphic commands; and the analysis of images based on a picture captured by medical imaging equipment, video cameras, or Image scanners. In image processing the analysis of scenes frequently requires image enhancement, regular pattern detection, and selected feature highlighting.

Image analysis and enhancement can be accomplished through the use of filters applied to the image data. Image data collected from an image input device is stored as a series of picture elements (or pixels). A procedure may be employed to analyze these pixels to create a new image that enhances certain image features. For example, a procedure may be applied which results in an image showing an outline of objects contained in the original image. The application of this analysis procedure is called filtering and the procedure itself is a filter. The present invention implements a process for filtering.

The application of filters in image analysis systems has typically been accomplished through a sequential procedure using, for example, a computer algorithm to generate the filtered data. As the size of an image display screen has become larger, and the resolution or number of pixels has become greater, the time required to filter an image has increased substantially. In current high resolution displays of, for example, 1024x1024 pixels, there are approximately 1 million pixels which must be processed by the filter or interpolation algorithm. As a result, graphic system response times for these operations have become increasingly longer.

Eleventh Colloquium GRETS1, Nice, 1st-5th June 1987 includes, at pages 649-652 a disclosure of a system called OPSILA which has parallel processing units and accomplishes filtering rapidly. Use of the apparatus to perform convolution operations is disclosed, but the problem of processing the picture elements at the boundaries of the picture is not discussed, nor a solution proposed.

SUMMARY OF THE INVENTION

Accordingly, the present invention provides a method for performing a convolution operation, using an image convolution filter, on image data represented by a plurality of picture elements stored in a first storage means, the elements being arrayed in rows and columns, the method characterised by the steps of adding boundary lines on all edges of said image data, so as to avoid the need for additional logic to process boundary conditions ; reading a plurality of lines of image data comprising said added boundary lines from said first storage means into a second storage means; transmitting a column of image data comprising one value in each of said plurality of lines to a plurality of processing units connected in parallel; transforming said column of values according to said image filter to create a transformed output image value; repeating the transmitting and transforming steps, until all columns of data from said second storage means have been processed; reading an additional line from said first storage means to replace a line of data in said second storage means; repeating the transmitting and transforming steps, until all elements of the source image have been processed.

BRIEF DESCRIPTION OF THE DRAWINGS

Fig. 1 is a block diagram depicting the elements of a raster graphics system.

Fig. 2 is a block diagram showing the logical data flow of a graphics system according to the present invention.

Fig. 3 is a block diagram depicting the major components of the parallel processor section of a graphics system.

Fig. 4 is a representation of a source image pixel array to be processed according to the present invention.

Fig. 5 is a representation of a kernel to be convolved with the source image.

Fig. 6 is a representation of an output image pixel array resulting from processing according to the present invention.

Fig. 7 is a simplified flow chart of the portion of the method performed in each processor for convolving image data according to the present invention.

Fig. 8 is a representation of the source image pixel array of Fig. 4 augmented according to the present invention.

Fig. 9 is a representation of the processing activities of each of the parallel processors in applying the method of the present invention.

Figs. 10(a) - 10(e) are examples of convolution kernels for specific purposes.

DETAILED DESCRIPTION OF THE PREFERRED EMBODIMENT

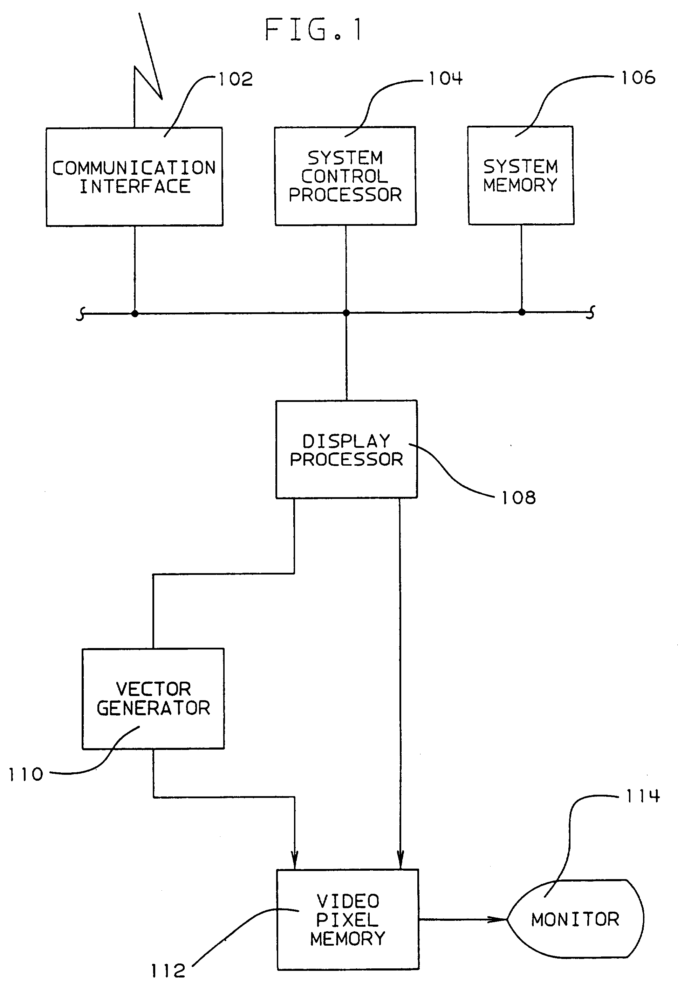

The present invention is implemented as part of a raster graphics display system. A typical raster graphics display system is shown in Fig. 1. The system communicates with a host processor through host communications interface 102. System functions are controlled by system control processor 104 which is responsible for servicing all attached graphics input/output devices such as a tablet and a keyboard. In addition, the system control processor coordinates the processing of display processor 108 and the host system interface. Graphics and image processing programs and image data are stored in system memory 106 after being downloaded from the host computer through communications interface 102.

Display processor 108 is responsible for executing the graphics and image commands which reside in the system memory and produces the resulting image that will appear on display monitor 114. The display processor, when operating in a graphics mode, decodes graphics orders to generate a graphics object for display. In processing the graphics order, display processor 108 performs transformation, clipping, and mapping of geometric primitives such as lines, characters and polygons. Data generated by the display processor 108 is passed to the vector generator 110 which generates the pixels of the resulting image to be placed in video pixel memory 112. Video pixel memory 112 stores the image data for display on video monitor 114. In the preferred embodiment, video pixel memory 112 consists of eight IKxIK bit planes supporting 256 colors simultaneously through the use of color lookup tables. The video pixel memory 112 can be extended to 24 bit planes with 8 bit planes for each of three colors, e.g. red, green, and blue.

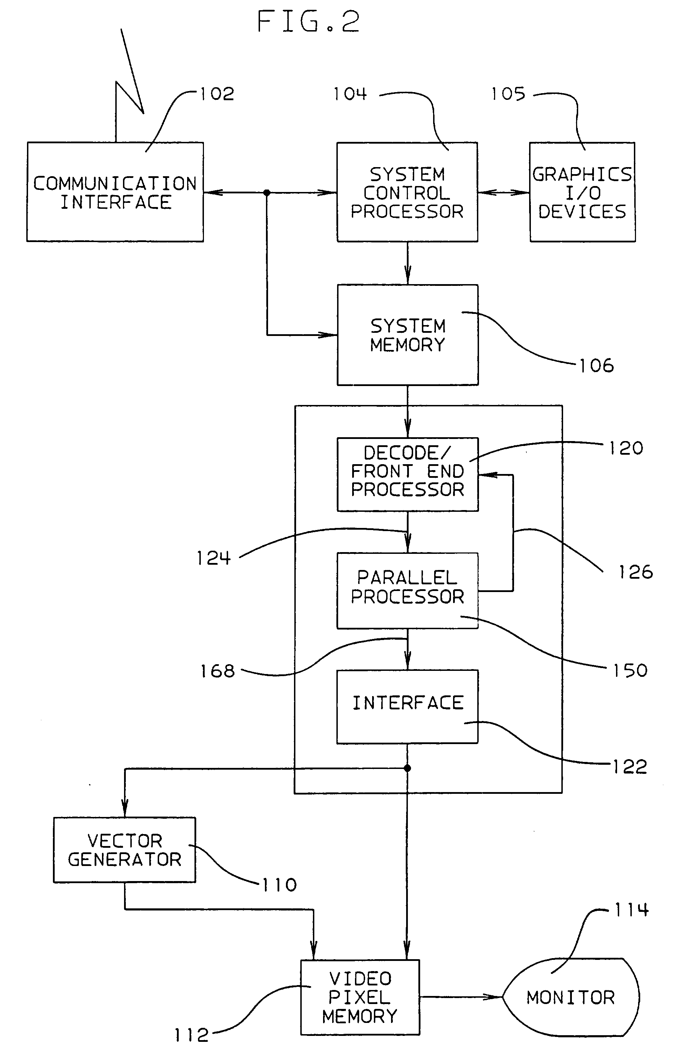

A graphics and image processing system is shown functionally in Fig. 2. The logical data flow of the system is as follows. An application program is loaded from the host processor through the host communication interface 102 into system memory 106. Keyboard commands and graphics device input generated by the I/O devices 105 are processed by system control processor 104 and, if necessary, stored in system memory 106. The system control processor performs any required preprocessing and then interrupts the display processor 108 causing it to process the data. Data processed by display processor 108 is either written directly to the video pixel memory 112 or, if vector generation is required, is passed to vector generator 110 which creates the necessary image to be written to video pixel memory 112. The final image is generated from video pixel memory 112 onto display monitor 114.

Fig. 2 provides additional detail of the display processor 108. Display processor 108 contains three functional components: section 120 performs the decoding of graphics orders and image manipulation instructions; parallel processor section 150 contains several processors which, in a graphics mode, perform the transformation, clipping and mapping and, in image processing mode, perform the necessary image filtering or image interpolation. Interface section 122 interfaces the output of the parallel processor section with either the video pixel memory 112 or vector generator 110.

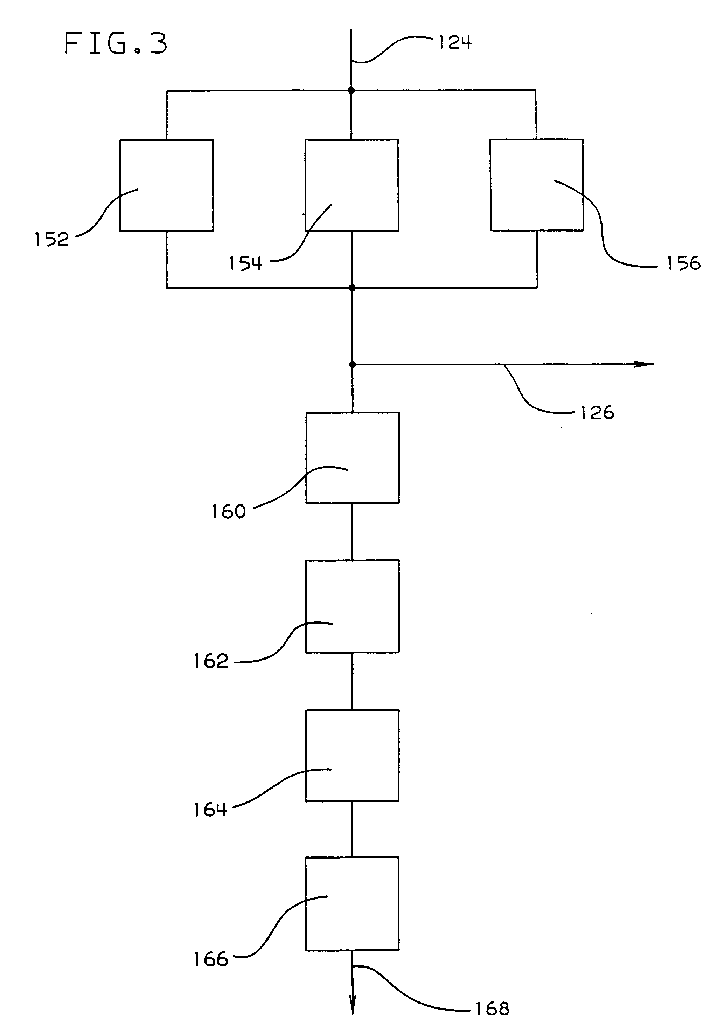

Parallel processor section 150 is shown in greater detail in Fig. 3. In the preferred embodiment, processor section 150 consists of seven processing units configured so that three of the processing units operate in parallel and four others sequentially. The entire parallel processor section operates in a pipeline fashion so that data is continually processed through the section without waiting for completion of all processing by any single processor. Processors 152, 154, and 156 operate in parallel with the output passed to sequentially linked processors 160, 162, 164 and 166. The output of processor 166 is passed to the interface section 122 along line 168. The processing by decoder 120 sets up the parallel processing section for processing and communicates to it via line 124. Feedback from the parallel processing section is provided by line 126 which in turn is connected to decoder 120.

The floating point processors employed in the parallel processor section can be any general purpose floating point processor such as one with 32-bit floating point capability. For example, the Transputer by INMOS Technologies can be employed in this application. (Transputer is a trademark of INMOS.) The selected floating point processor must have a floating point multiplier, floating point adder, simple sequencer, a first-in first-out queue for input and another for output, and internal registers for storing the kernel function.

Parallel processors 152, 154, and 156 perform image filter convolution. Processor 160 synchronizes the data from the parallel processors, and passes it to processor 162 for lower bound clipping and then to processor 164 for upper bound clipping. Processor 166 converts the floating point values to fixed point and passes the result to video pixel memory 112.

The implementation of image processing filtering and bi-linear interpolation using this parallel processing architecture requires a discussion of the algorithms employed for filtering. The method of the present invention was designed to perform convolution of discrete data for use as digital image filter. Convolutions can be used to perform high pass filtering, low pass filtering, band pass filtering (for noise removal), high boost filtering (providing edge enhancement), edge detection, and directional feature enhancement.

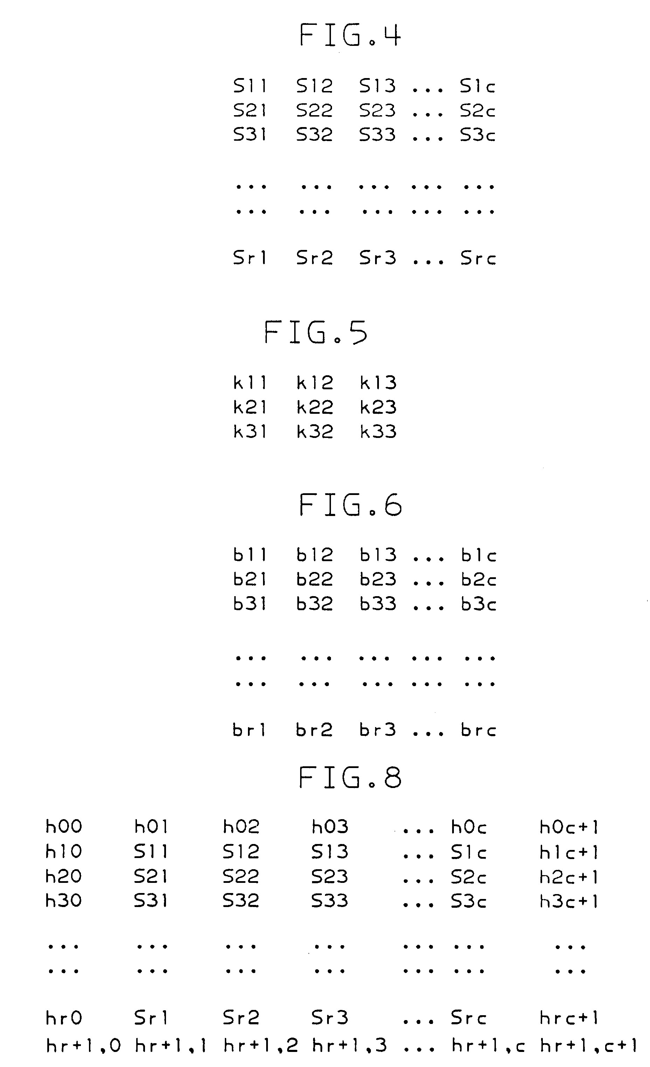

Fig. 4 illustrates a source image pixel array having c columns numbered 1 through c, and r rows numbered 1 through r. The source image pixel array represents an image that is to be filtered. The source image can be any scanned image, such as that from satellite based image detectors, x-ray equipment, or other medical imaging devices. Each pixel of the image is represented in Fig. 4 by the letter $(S_{rc})$, where r indicates the row and c the column. The digital image is represented by a color intensity value stored at each location. The image can be stored as a monochrome image of varying intensity values or as a color image with intensity values for each represented color.

In the preferred embodiment, the image data is stored in an eight bit per pixel per color format. Thus, each pixel requires the storage of 24 bits. The present method is designed to operate on each color separately and therefore process eight bits per pixel. Each pixel has an intensity value of 0 to 255 for each color. Because each color is independent of the other two colors, additional hardware may be added so that all three color components can be computed simultaneously.

The digital filtering to be employed in a particular case is defined by the kernel function convolved with the original image. This kernel is specified in the preferred embodiment as a 3x3 matrix as shown in Fig. 5. The present invention employs a 3x3 kernel, however, the method described herein can be extended to kernels of larger or smaller sizes. Larger kernels result in more ideal (i.e. higher order) filtering at the expense of increased processing time.

The output image pixel array is illustrated in Fig. 6 and comprises an image of the same dimensions (r x c) as the source image pixel array. The value of each output image pixel $b_{ij}$ is a function of the source image pixel $S_{ij}$ and the eight pixels surrounding the source pixel. The function applied to the source image is specified by the kernel function as shown in Fig. 5. For each 3x3 sub-matrix of the source image convolution with the kernel function results in a single output pixel. The value of output pixel $b_{ij}$ can be represented as follows:

$$b_{ij} = k11*S(i-1)(j-1)+k12*S(i-1)(j)+k13*S(i-1)(j+1)$$

$$+k21*S(i)(j-1)+k22*S(i)(j)+k23*S(i)(j+1)$$

$$+k31*S(i+1)(j-1)+k32*S(i+1)(j)+k33*S(i+1)(j+1).$$

Based on this formulation, the calculation of a single output pixel $b_{ij}$ requires nine multiplications and eight additions or a total of seventeen operations. The present invention is directed to a method of speeding up the calculation of the filtered image. Processing of the entire source image requires successive applications of the kernel to successive sub-matrices of the source image S.

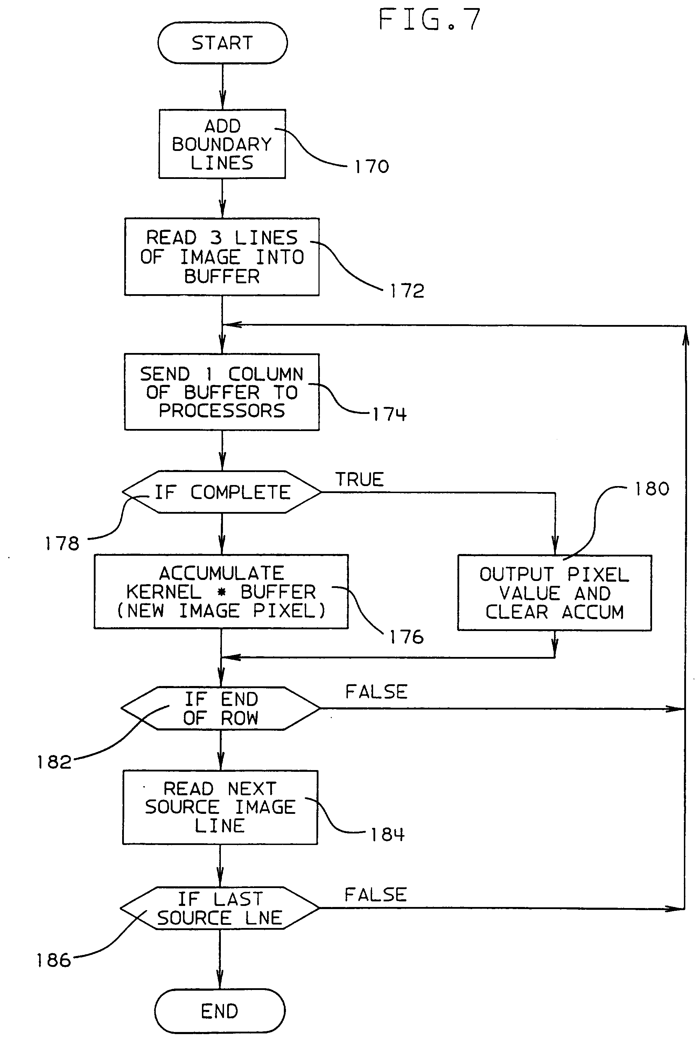

The method of the present invention operates as follows. Fig. 7 depicts a flow chart describing the method.

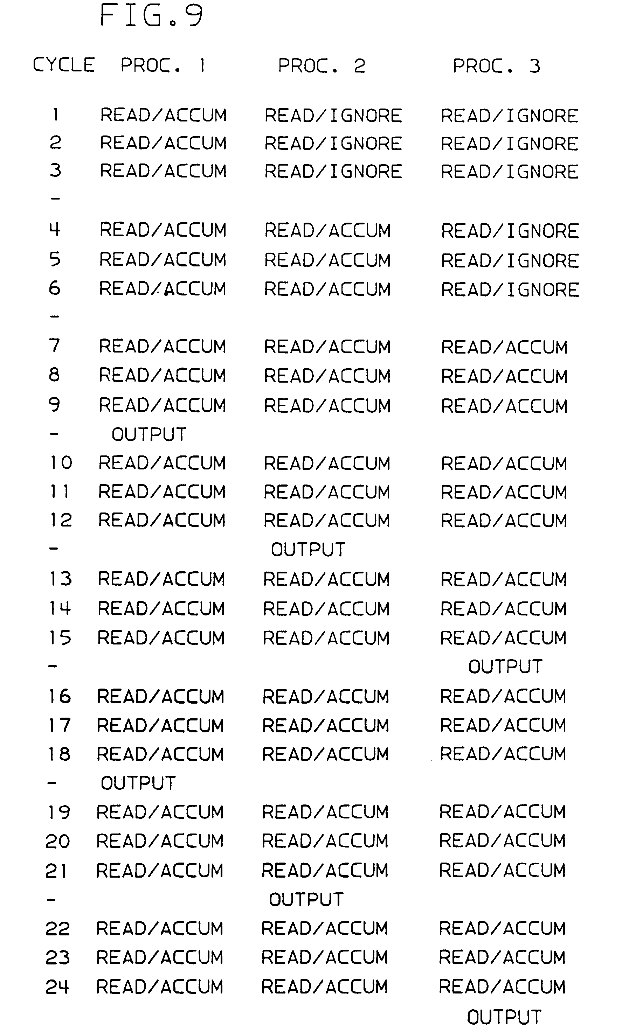

The front end processor 120 begins by adding boundary lines on each side of the image 170. For processing with a 3x3 kernel, one line is added on each side resulting in an image as shown in Fig. 8. The additional boundary lines are necessary so that the processor can always deal with a 3x3 sub-matrix even at the extreme edges of the original image. This eliminates the need for additional logic to process the boundary conditions. If a kernel larger than 3x3 is employed, additional boundary lines will need to be added.

The second step 172 reads three lines of source image data into a processing buffer. Thus, from Fig. 8 the initial lines read will be:

$h_{00}\ h_{01}\ h_{02} ... h_{0c+1}$
$h_{10}\ S_{11}\ S_{12} ... h_{1c+1}$
$h_{20}\ S_{21}\ S_{22} ... h_{2c+1}.$

The three parallel floating point processors each clear an accumulator register.

The next processor step 174 sends one column from the three buffers to the floating point processors. An additional column is sent after each series of three machine cycles, in the preferred embodiment.

The floating point processors carry out step 176, accumulation of the output image pixel. If computation has been completed 178 the floating point processor sends the computed output pixel $b_{ij}$ 180 and clears the accumulator to begin computation of the next pixel. Otherwise, the processor calculates the inner product of the column sent by step 174 and the transpose of a column of the kernel function.

After the processing step, a test for an end of a row condition is required 182. If not at the end of the row, control returns to the front end processor 120 which sends another column to the processor 174. If the end of the row has been reached, the next line of the source image is read into the buffers 184. If no lines remain 186, image processing is completed and control passes to the next operation. Otherwise, control returns to the front end processor 120 to continue sending a column at a time from the buffers to the parallel processors. It should be noted that the lines are processed three lines at a time but, upon reaching the end of a row, only one line is replaced. This is consistent with the single row increment of the sub-matrix necessary to properly calculate each pixel in the output image pixel array.

The parallel processors each perform the accumulation testing and output steps 176, 178, and 180. After reaching steady state, which requires nine cycles for a 3x3 convolution kernel, the processor array will compute a new pixel every additional three cycles.

The three floating point processors are arranged so that the input and output functions are synchronized between the processors. That is, each processor reads at the same time and writes at the same time. The method of calculating the convolution is set up so that the processors are out of phase by three machine cycles so that valid data will be sent from only one processor at a time to the subsequent processor.

The initial processing of the image requires nine machine cycles before steady state is reached. At the end of the nine steps, each of the processors is engaged in calculating a separate output image pixel value. During the first nine steps one or two of the processors is made idle to establish the phase offset necessary in the application of the method.

Fig. 9 illustrates the processing cycles for each of the processors in the first 24 processing cycles. Processor 1 first begins the calculation of output image pixel $b_{11}$. This calculation will be based on the sub-matrix of nine elements as follows:

$h_{00}\ h_{01}\ h_{02}$
$h_{10}\ S_{11}\ S_{12}$
$h_{20}\ S_{21}\ S_{22}$

The convolution kernel presented in Fig. 5 will be applied to this sub-matrix. Step 174 sends the first column of the source matrix ($h_{00}, h_{10}, h_{20}$) to all three processors. In step 1 of Fig. 9 all three processors read the first element $h_{00}$ from the buffer column. Processor 1 ac-

cumulates the product of $h_{00}$ and $k_{11}$ while processors 2 and 3 ignore the value read. In step 2, processor 1 adds the product of $h_{10}$ and $k_{21}$ to the previously accumulated value while processors 2 and 3 ignore the new value. In step 3, processor 1 reads value $h_{20}$ and accumulates $h_{20}*k_{31}$ while processors 2 and 3 again ignore the value. Front end processor 120 next passes the second column ($h_{01}$, $S_{11}$, $S_{21}$) to the processors.

At this point, processor 2 will begin accumulation of output pixel $b_{12}$. In step 4 all three processors read value $h_{01}$ and processor 1 accumulates the value of $h_{01}*k_{12}$ while processor 2 accumulates the value of $h_{01}*k_{11}$. Processor 3 ignores the $h_{01}$ value. Beginning with cycle 7, processor 3 will begin to accumulate the value for output pixel $b_{13}$. Finally at the end of step 9 the value for output pixel $b_{11}$ has been accumulated in processor 1 and is available as output. The output of processors 2 and 3 are set to null. After three more steps pixel $b_{12}$ is available as the output of processor 2 while processors 1 and 3 present null values. Finally, after step 15, processor 3 has the value of pixel $b_{13}$ as output. After three more steps, processor 1 is able to send the value for pixel $b_{14}$. Thereafter, the pattern continues to repeat with each processor putting out a value every nine cycles, with one pixel being created every three cycles by one of the processors. Thus, the processing time for this convolution method is three times faster than using a single serial process. The processors must be re-initialized for nine cycles at the beginning of each new row of the sub-matrix.

The four chips comprising the pipeline following the parallel chips perform the following functions. Floating point processor 160 synchronizes the data from the three parallel processors and passes it to processor 162. Processor 162 ensures that the floating point data has a positive data value. Processor 164 truncates the data to ensure that it is within the fixed point range of the frame buffer. Finally, processor 166 converts the data from floating point format back into fixed point format and sends it to the video pixel memory.

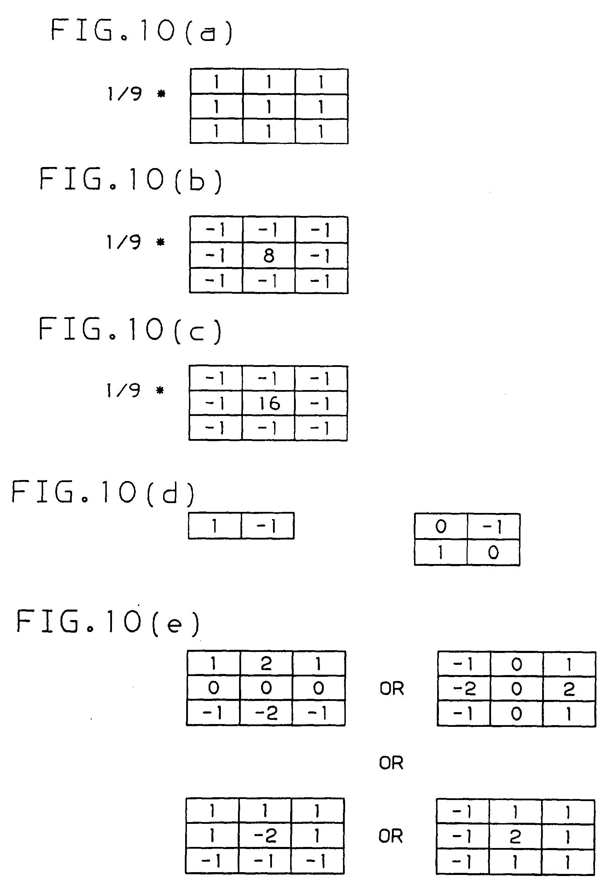

The specific convolution kernel selected depends upon the filtering of the source image that is desired. Fig. 10(a) through 10(e) represent various kernels to accomplish different objectives. Fig. 10(a) is a low pass filter kernel which tends to blur an image. Fig. 10(b) is a high pass filter that results in an image in which only the outline of the initial image features remain. A high boost filter is shown in Fig. 10()c which provides edge enhancement like the high pass filter but also preserves most of the low frequency components. The directional high pass filter kernels shown in Fig. 10(d) are useful for land surveying and other tasks in which it is desirable to accentuate certain features based on their orientation and to suppress features orthogonal to the direction of interest. Finally Fig. 10(e) presents additional edge detection kernels.

The above description has presented an image processing method for use with a specific number of processors and other components. The number of processors connected in parallel can be increased to handle problems of various sizes. In addition, different configurations of the pipeline processing elements could be employed.

## Claims

1. A method for performing a convolution operation, using an image convolution filter ($k_{11}$-$k_{33}$), on image data ($S_{ij}$) represented by a plurality of picture elements stored in a first storage means (106), the elements being arrayed in rows and columns, the method characterised by the steps of:

    adding boundary lines on all edges of said image data, so as to avoid the need for additional logic to process boundary conditions;

    reading (172) a plurality of lines of image data comprising said added boundary lines from said first storage means (106) into a second storage means;

    transmitting (174) a column of image data comprising one value in each of said plurality of lines to a plurality of processing units (150) connected in parallel;

    transforming (176) said column of values according to said image filter to create a transformed output image value ($b_{ij}$);

    repeating (182) the transmitting and transforming steps, until all columns of data from said second storage means have been processed;

    reading (184) an additional line from said first storage means (106) to replace a line of data in said second storage means;

    repeating (186) the transmitting and transforming steps, until all elements of the source image have been processed.

2. A method as claimed in claim 1 wherein the step of reading a plurality of lines reads three lines.

3. A method as claimed in any preceding claim wherein said image convolution filter is a 3 x 3 convolution filter.

4. A method as claimed in claim 3 wherein the parallel processors produce output every third processing cycle.

## Patentansprüche

1. Ein Verfahren für die Durchführung einer Faltungsoperation unter Verwendung eines Abbildfaltungsfilters ($k_{11}$-$k_{33}$) für Abbilddaten ($S_{ij}$), die durch eine Vielzahl von Bildelementen dargestellt werden, die in einer ersten Speichereinrichtung (106) gespeichert sind, wobei die Elemente in Reihen und Spalten angeordnet sind und wobei das Verfahren gekennzeichnet ist durch die Schritte:

   zum Hinzufügen von Grenzzeilen an allen Rändern der Abbilddaten, um die Notwendigkeit einer zusätzlichen Logik für das Verarbeiten von Grenzbedingungen zu vermeiden;

   zum Lesen (172) einer Vielzahl von Zeilen der Abbilddaten, die diese hinzugefügten Grenzzeilen umfassen, aus der ersten Speichereinrichtung (106) in eine zweite Speichereinrichtung;

   zum Übertragen (174) einer Spalte von Abbilddaten, die einen Wert in jeder Zeile einer Vielzahl von Zeilen enthält, an eine Vielzahl von Verarbeitungseinheiten (150), die parallel miteinander verbunden sind;

   zum Umwandeln (176) der Spalte von Werten gemäß dem Abbildfilter, um einen umgewandelten Ausgabeabbildwert ($b_{ij}$) zu erstellen;

   zum Wiederholen (182) der Übertragungs- und Umwandlungsschritte, bis alle Datenspalten der zweiten Speichereinrichtung verarbeitet wurden;

   zum Lesen (184) einer zusätzlichen Zeile aus der ersten Speichereinrichtung (106), um eine Zeile von Daten in der zweiten Speichereinrichtung zu ersetzen; und

   zum Wiederholen (186) der Übertragungs- und Umwandlungsschritte, bis alle Elemente des Quellenabbilds verarbeitet wurden.

2. Ein Verfahren nach Anspruch 1, wobei in dem Schritt zum Lesen einer Vielzahl von Zeilen drei Zeilen gelesen werden.

3. Ein Verfahren nach einem der vorangehenden Ansprüche, wobei es sich bei dem Abbildfaltungsfilter um einen 3 x 3 Faltungsfilter handelt.

4. Ein Verfahren nach Anspruch 3, wobei die parallelen Prozessoren bei jedem dritten Verarbeitungszyklus eine Ausgabe erzeugen.

## Revendications

1. Méthode pour effectuer une opération de convolution, en utilisant un filtre de convolution d'image ($k_{11}$-$k_{33}$) sur des données-image ($S_{ij}$) représentées par une pluralité d'éléments d'image stockés dans un premier moyen de stockage (106), les éléments étant agencés en rangées et colonnes, la méthode étant caractérisée par les étapes de :

   addition de lignes de limite sur tous les bords desdites données-image, de manière à éviter la nécessité d'une logique additionnelle pour traiter les conditions aux limites;

   lecture (172) d'une pluralité de lignes de données-image, comprenant lesdites lignes de limite ajoutées, dans ledit premier moyen de stockage (106), pour l'introduire dans un deuxième moyen de stockage;

   transmission (174) d'une colonne de données-image, comprenant une valeur dans chacune parmi une pluralité de lignes, à une pluralité d'unités de traitement (150) reliées en parallèle;

   transformation (176) de ladite colonne de valeurs en utilisant ledit filtre d'image pour créer une valeur d'image de sortie transformée (bij);

   répétition (182) des étapes de transmission et de transformation, jusqu'à ce que toutes les colonnes de données dudit deuxième moyen de stockage aient été traitées;

   lecture (184) d'une ligne additionnelle à partir dudit premier moyen de stockage (106), pour remplacer une ligne de données dans ledit deuxième moyen de stockage;

   répétition (186) des étapes de transmission et de transformation, jusqu'à ce que tous les éléments de l'image source aient été traités.

2. Méthode selon la revendication 1, dans laquelle l'étape de lecture d'une pluralité de lignes effectue la lecture de trois lignes.

3. Méthode selon l'une quelconque des revendications précédentes, dans laquelle ledit filtre de convolution d'image est un filtre de convolution 3 x 3.

4. Méthode selon la revendication 3, dans laquelle lesdits processeurs parallèles produisent un signal de sortie à chaque troisième cycle de processeur.

# FIG.1

COMMUNICATION INTERFACE — 102

SYSTEM CONTROL PROCESSOR — 104

SYSTEM MEMORY — 106

DISPLAY PROCESSOR — 108

VECTOR GENERATOR

110

VIDEO PIXEL MEMORY

112

MONITOR — 114

FIG.2

```
                                      ┌─────────┐
  ┌──────────────┐      ┌──────────┐  │ GRAPHICS│
  │COMMUNICATION │◄────►│  SYSTEM  │◄►│   I/O   │
  │  INTERFACE   │      │ CONTROL  │  │ DEVICES │
  └──────────────┘      │PROCESSOR │  └─────────┘
                        └──────────┘
                              │
                              ▼
                        ┌──────────┐
                        │  SYSTEM  │
                        │  MEMORY  │
                        └──────────┘
```

102  104  105  106

DECODE/
FRONT END
PROCESSOR — 120

124  PARALLEL PROCESSOR  126

150

168  INTERFACE  122

VECTOR
GENERATOR — 110

VIDEO
PIXEL
MEMORY — 112

MONITOR — 114

FIG.3

## FIG.4

| S11 | S12 | S13 | ... | S1c |
|-----|-----|-----|-----|-----|
| S21 | S22 | S23 | ... | S2c |
| S31 | S32 | S33 | ... | S3c |
| ... | ... | ... | ... | ... |
| ... | ... | ... | ... | ... |
| Sr1 | Sr2 | Sr3 | ... | Src |

## FIG.5

| k11 | k12 | k13 |
|-----|-----|-----|
| k21 | k22 | k23 |
| k31 | k32 | k33 |

## FIG.6

| b11 | b12 | b13 | ... | b1c |
|-----|-----|-----|-----|-----|
| b21 | b22 | b23 | ... | b2c |
| b31 | b32 | b33 | ... | b3c |
| ... | ... | ... | ... | ... |
| ... | ... | ... | ... | ... |
| br1 | br2 | br3 | ... | brc |

## FIG.8

| h00 | h01 | h02 | h03 | ... | h0c | h0c+1 |
|-----|-----|-----|-----|-----|-----|-------|
| h10 | S11 | S12 | S13 | ... | S1c | h1c+1 |
| h20 | S21 | S22 | S23 | ... | S2c | h2c+1 |
| h30 | S31 | S32 | S33 | ... | S3c | h3c+1 |
| ... | ... | ... | ... | ... ... | | ... |
| ... | ... | ... | ... | ... ... | | ... |
| hr0 | Sr1 | Sr2 | Sr3 | ... | Src | hrc+1 |
| hr+1,0 | hr+1,1 | hr+1,2 | hr+1,3 | ... | hr+1,c | hr+1,c+1 |

# FIG.7

```
        ┌─────────┐
        │  START  │
        └─────────┘
             │
             ▼
      ┌─────────────┐
      │     ADD     │
      │  BOUNDARY   │──── 170
      │    LINES    │
      └─────────────┘
             │
             ▼
      ┌─────────────┐
      │ READ 3 LINES│
      │OF IMAGE INTO│──── 172
      │   BUFFER    │
      └─────────────┘
             │
             ▼
      ┌─────────────┐
      │SEND 1 COLUMN│
      │OF BUFFER TO │──── 174
      │ PROCESSORS  │
      └─────────────┘
             │
             ▼
      ╱─────────────╲        TRUE         ┌──────────────┐
178 ──╲ IF COMPLETE ╱───────────────────► │ OUTPUT PIXEL │── 180
      ╲─────────────╱                     │  VALUE AND   │
             │                            │ CLEAR ACCUM  │
             ▼                            └──────────────┘
      ┌─────────────┐
      │  ACCUMULATE │
      │KERNEL * BUFFER│
      │(NEW IMAGE PIXEL)│── 176
      └─────────────┘
             │
             ▼
      ╱─────────────╲        FALSE
182 ──╲   IF END    ╱────────────────────►
      ╲  OF ROW     ╱
             │
             ▼
      ┌─────────────┐
      │  READ NEXT  │
      │SOURCE IMAGE │──── 184
      │    LINE     │
      └─────────────┘
             │
             ▼
      ╱─────────────╲        FALSE
186 ──╲  IF LAST    ╱────────────────────►
      ╲ SOURCE LNE  ╱
             │
             ▼
        ┌─────────┐
        │   END   │
        └─────────┘
```

# FIG.9

| CYCLE | PROC. 1 | PROC. 2 | PROC. 3 |
|---|---|---|---|
| 1 | READ/ACCUM | READ/IGNORE | READ/IGNORE |
| 2 | READ/ACCUM | READ/IGNORE | READ/IGNORE |
| 3 | READ/ACCUM | READ/IGNORE | READ/IGNORE |
| - | | | |
| 4 | READ/ACCUM | READ/ACCUM | READ/IGNORE |
| 5 | READ/ACCUM | READ/ACCUM | READ/IGNORE |
| 6 | READ/ACCUM | READ/ACCUM | READ/IGNORE |
| - | | | |
| 7 | READ/ACCUM | READ/ACCUM | READ/ACCUM |
| 8 | READ/ACCUM | READ/ACCUM | READ/ACCUM |
| 9 | READ/ACCUM | READ/ACCUM | READ/ACCUM |
| - | OUTPUT | | |
| 10 | READ/ACCUM | READ/ACCUM | READ/ACCUM |
| 11 | READ/ACCUM | READ/ACCUM | READ/ACCUM |
| 12 | READ/ACCUM | READ/ACCUM | READ/ACCUM |
| - | | OUTPUT | |
| 13 | READ/ACCUM | READ/ACCUM | READ/ACCUM |
| 14 | READ/ACCUM | READ/ACCUM | READ/ACCUM |
| 15 | READ/ACCUM | READ/ACCUM | READ/ACCUM |
| - | | | OUTPUT |
| 16 | READ/ACCUM | READ/ACCUM | READ/ACCUM |
| 17 | READ/ACCUM | READ/ACCUM | READ/ACCUM |
| 18 | READ/ACCUM | READ/ACCUM | READ/ACCUM |
| - | OUTPUT | | |
| 19 | READ/ACCUM | READ/ACCUM | READ/ACCUM |
| 20 | READ/ACCUM | READ/ACCUM | READ/ACCUM |
| 21 | READ/ACCUM | READ/ACCUM | READ/ACCUM |
| - | | OUTPUT | |
| 22 | READ/ACCUM | READ/ACCUM | READ/ACCUM |
| 23 | READ/ACCUM | READ/ACCUM | READ/ACCUM |
| 24 | READ/ACCUM | READ/ACCUM | READ/ACCUM |
| | | | OUTPUT |

FIG.10(a)

1/9 *

| 1 | 1 | 1 |
|---|---|---|
| 1 | 1 | 1 |
| 1 | 1 | 1 |

FIG.10(b)

1/9 *

| -1 | -1 | -1 |
|----|----|----|
| -1 | 8  | -1 |
| -1 | -1 | -1 |

FIG.10(c)

1/9 *

| -1 | -1 | -1 |
|----|----|----|
| -1 | 16 | -1 |
| -1 | -1 | -1 |

FIG.10(d)

| 1 | -1 |
|---|----|

| 0 | -1 |
|---|----|
| 1 | 0  |

FIG.10(e)

| 1  | 2  | 1  |
|----|----|----|
| 0  | 0  | 0  |
| -1 | -2 | -1 |

OR

| -1 | 0 | 1 |
|----|---|---|
| -2 | 0 | 2 |
| -1 | 0 | 1 |

OR

| 1  | 1  | 1  |
|----|----|----|
| 1  | -2 | 1  |
| -1 | -1 | -1 |

OR

| -1 | 1 | 1 |
|----|---|---|
| -1 | 2 | 1 |
| -1 | 1 | 1 |